Europäisches Patentamt

European Patent Office

Office européen des brevets

(19)

(11) Numéro de publication : **0 552 074 B1**

## (12) FASCICULE DE BREVET EUROPEEN

(45) Date de publication du fascicule du brevet :
04.01.95 Bulletin 95/01

(51) Int. Cl.⁶ : **G06F 15/16, G06F 15/80**

(21) Numéro de dépôt : **93400033.2**

(22) Date de dépôt : **08.01.93**

(54) **Système de traitement de données multiprocesseur.**

(30) Priorité : **14.01.92 FR 9200312**

(43) Date de publication de la demande :
**21.07.93 Bulletin 93/29**

(45) Mention de la délivrance du brevet :
**04.01.95 Bulletin 95/01**

(84) Etats contractants désignés :
**DE GB**

(56) Documents cités :
**EP-A- 0 236 762
EP-A- 0 367 182
JOURNAL OF VLSI SIGNAL PROCESSING vol. 2, no. 1, Septembre 1990, DORDRECHT NL pages 9 - 16 T. KEAN 'Configurable hardware: Two case studies of micro-grain computation'
IEEE INTERNATIONAL CONFERENCE ON NEURAL NETWORKS 24 Juin 1988, SAN DIEGO, CA, US pages 165 - 172 S. Y. KUNG 'Parallel architectures for artificial neural nets'**

(56) Documents cités :
**PATTERN RECOGNITION vol. 24, no. 2, 1991, ELMSFORD, NY US pages 105 - 119 I GUYON 'Design of a neural network character recognizer for a touch terminal'
10TH INTERNATIONAL CONFERENCE ON PATTERN RECOGNITION 16 Juin 1990, ATLANTIC CITY, NJ, US pages 35 - 40 Y. LE CUN 'Handwritten Zip code recognition with multilayer networks'**

(73) Titulaire : **FRANCE TELECOM
Exploitant Autonome de Droit Public,
6, Place d'Alleray
F-75015 Paris (FR)**

(72) Inventeur : **Thepaut, André
32 Route de Kérézoun
F-29280 Plouzane (FR)**
Inventeur : **Ouvradou, Gérald
2 rue Renoir
F-29280 Plouzane (FR)**

(74) Mandataire : **Martinet & Lapoux
BP 405
F-78055 St. Quentin en Yvelines Cédex (FR)**

# Description

La présente invention concerne de manière générale des systèmes de traitement de données multiprocesseur.

Les besoins en puissance de calcul sans cesse croissants dans les systèmes de traitement de données pour des applications telles que le traitement d'images ou le calcul scientifique, ont conduit les concepteurs d'ordinateur à introduire de nouvelles architectures à processeurs : les architectures parallèles. Trois principes de base sont utilisés pour introduire ce parallélisme dans les nouvelles architectures. On distingue :

- les architectures segmentées (ou pipeline) : Elle consiste à décomposer une tâche en plusieurs étapes et à exécuter les étapes indépendamment par des processeurs différents. Chaque fois qu'un résultat intermédiaire est obtenu après l'exécution d'une étape, il est transmis au processeur suivant et ainsi de suite. Lorsqu'une étape est terminée, le processeur responsable de son exécution est libéré et devient donc disponible pour traiter de nouvelles données. En supposant que les durées d'exécution respectives des différentes étapes soient sensiblement égales, la période d'obtention des résultats finaux est alors la durée d'exécution d'une étape, et non la durée d'exécution de la tâche;
- les architectures à processeurs matriciels ou architectures SIMD (Single Instruction, Multiple Data Stream). Dans ce type d'architecture, l'accroissement en capacité de calcul est obtenu en faisant exécuter la même instruction par un nombre élevé d'unités de traitement identiques. Ce type d'architecture est particulièrement bien adapté au traitement vectoriel; et
- les architectures multiprocesseurs ou architectures MIMD (Multiple Instruction, Multiple Data Stream). Dans une telle architecture, plusieurs processeurs exécutent indépendamment l'un de l'autre des suites d'instructions respectives. La communication entre les processeurs est assurée soit par une mémoire commune et/ou par un réseau d'interconnexion entre processeurs.

La demande de brevet européen EP-A-433142 décrit une architecture d'un système de traitement de données multiprocesseur dans lequel le bus est partagé entre plusieurs étages à processeur et est interfacé dans chaque étage par un réseau programmable de cellules logiques (LCA:Logic Cell Arrays) configuré en plusieurs moyens d'entrée/sortie et un moyen d'aiguillage. Le principal avantage d'une telle architecture est de soustraire chaque processeur aux tâches de requête et gestion du bus, celles-ci étant réalisées au sein du réseau de cellules logiques associé au processeur. Cette architecture n'est néanmoins pas optimale à l'égard de l'approche multiprocesseur pour des applications de calcul scientifique. Chaque processeur est en effet chargé de la quasi-totalité des tâches à réaliser (hors gestion du bus). De nombreuses applications multiprocesseurs nécessitent des moyens considérables de calcul et un seul processeur non spécialisé par étage limite les performances.

La présente invention vise à remédier aux inconvénients précités en fournissant un système de traitement de données optimisant l'approche multiprocesseur pour chaque étage de l'architecture précitée.

A cette fin, un système de traitement de données multiprocesseur selon l'invention incluant une pluralité de modules interconnectés en cascade par des bus intermodules,

chaque module comprenant une unité de traitement de données, une première mémoire, un moyen logique qui est configurable en des premier, second et troisième moyens d'interface d'entrée/sortie pour mémoriser temporairement des données et un moyen central pour traiter lesdites données mémorisées et aiguiller lesdites données mémorisées traitées vers l'un desdits moyens d'interface d'entrée/sortie, et un premier bus de module interconnectant ladite unité de traitement, ladite première mémoire et ledit premier moyen d'interface,

deux bus intermodules interconnectant lesdits second et troisième moyens d'interface respectivement à un troisième moyen d'interface et un second moyen d'interface dans deux modules adjacents audit module,

lesdites unités de traitement de données étant interconnectées en cascade à travers un réseau de communication,

est caractérisé en ce que chacun desdits modules comprend en outre une unité de traitement spécialisé et une seconde mémoire, et un quatrième moyen d'interface d'entrée/sortie est configuré dans ledit moyen logique configurable,

l'unité de traitement spécialisé, la seconde mémoire et le quatrième moyen d'interface d'entrée/sortie étant interconnectés par un second bus de module.

Selon une variante spécifique de l'invention, en sachant d'une part que le moyen pour traiter et aiguiller est configuré une fois pour toutes pour une application donnée et d'autre part que plusieurs traitements multiprocesseurs successifs peuvent être réalisés par les unités de traitement sur un même flux de données, les données déjà traitées selon un premier traitement doivent être redistribuées aux différents modules pour un traitement suivant. Dans ce cas, les second et troisième moyens d'interface d'entrée/sortie respectivement dans les moyens logiques des dernier et premier modules en cascade sont reliés au moyen d'un bus de rétroaction.

L'invention concerne également un procédé de traitement de données d'entrée mettant en oeuvre le système de traitement de données selon l'invention. Le procédé comprend :

- une étape d'initialisation consistant, en outre, à charger des ensembles de coefficients respectivement dans les secondes mémoires des modules à travers ledit réseau de communication, et lesdites données d'entrée dans la première mémoire du premier module, et

- au moins un ensemble de première et seconde étapes,

- la première étape consistant à effectuer des traitements partiels sur lesdites données d'entrée dans lesdites unités de traitement spécialisé en fonction desdits ensembles de coefficients afin d'établir des données partielles, respectivement,

- la seconde étape consistant à rapatrier des données partielles vers l'un quelconque des moyens logiques ou l'une quelconque des premières et secondes mémoires à travers lesdits bus intermodules et ledit bus de rétroaction.

D'autres caractéristiques et avantages de la présente invention apparaîtront plus clairement à la lecture de la description suivante de deux réalisations préférées, en référence aux dessins annexés correspondants dans lesquels :

- la figure 1 est un diagramme modélisé d'un réseau de neurones formels;

- la figure 2 est un diagramme d'une architecture en couches de la représentation modélisée de la figure 1;

- la figure 3 est un bloc diagramme d'un système de traitement de données multiprocesseur à bus actif reconfigurable selon la technique antérieure;

- les figures 4A et 4B sont deux bloc-diagrammes respectifs de deux variantes de système de traitement de données à coprocesseur spécialisé selon l'invention;

- la figure 5 est un diagramme d'images de caractéristiques obtenues pour des traitements successifs dans les couches d'un réseau de neurones formels;

- la figure 6 est un diagramme de connexions associées à des coefficients synaptiques entre deux couches adjacentes d'un réseau de neurones formels;

- la figure 7 est un diagramme de chargement de coefficients synaptiques relatifs à deux couches successives dans le système de traitement de données selon une réalisation préférée de l'invention; et

- la figure 8 est un diagramme d'algorithmes relatif au traitement des connexions entre deux couches successives mises en oeuvre dans le système selon la figure 7.

Le système de traitement de données multiprocesseur selon l'invention est décrit ci-après pour une réalisation particulière qui concerne les réseaux de neurones formels.

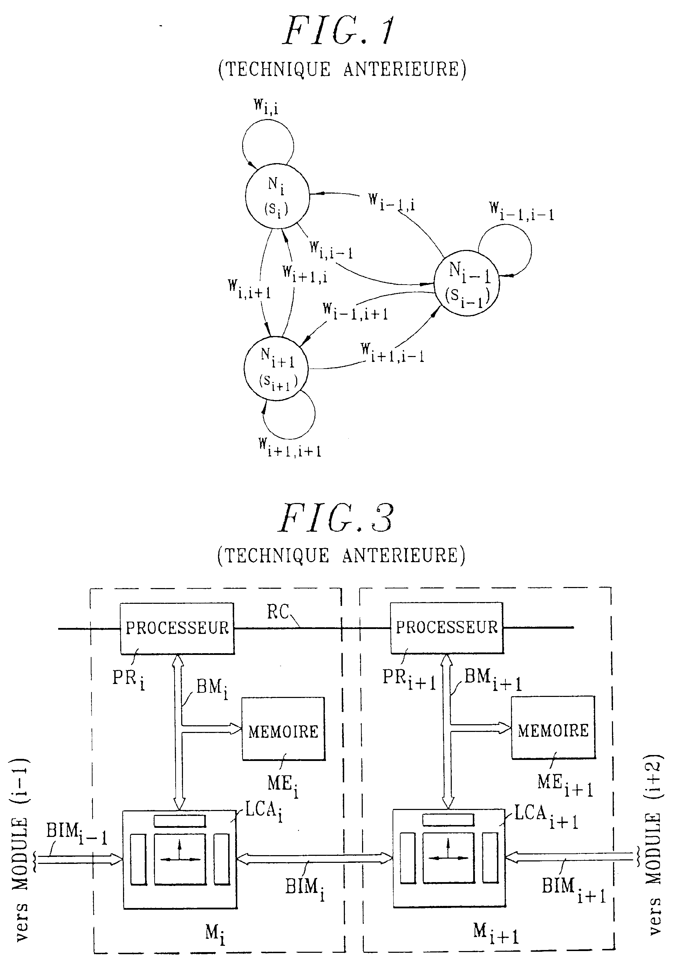

Un modèle très général de représentation d'un réseau de neurones multicouche est représenté à la figure 1 : un certain nombre d'unités élémentaires ... $N_{i-1}$, $N_i$, $N_{i+1}$ ... appelées neurones et définies par leur sortie respective...$S_{i-1}$, $S_i$, $S_{i+1}$...constituent les noeuds du réseau. Chaque neurone $N_i$ est excité par un "potentiel" $V_i$ défini par l'équation :

$$V_i = \sum_j W_{ji} \cdot S_j,$$

dans laquelle $S_j$ représente un niveau de sortie d'un neurone $N_j$ "connecté" au neurone $N_i$ et $W_{ji}$ désigne un coefficient synaptique de la connexion entre les neurones $N_j$ et $N_i$. A ce potentiel $V_i$ est associé le niveau de sortie $S_i$ correspondant du neurone $N_i$ défini par la relation :

$$S_i(t + \Delta t) = f(V_i(t))$$

dans laquelle f est une fonction non linéaire.

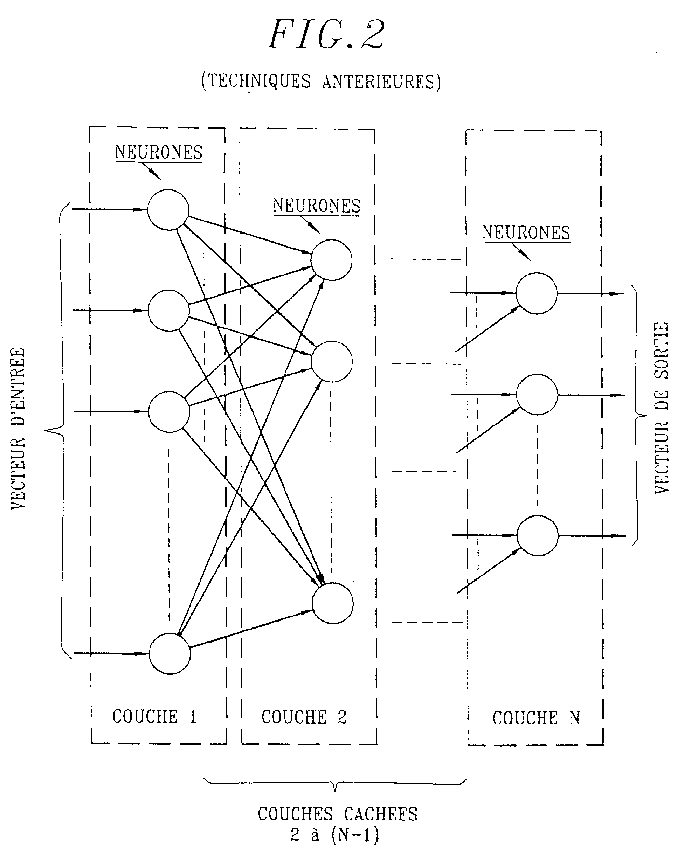

En pratique et par analogie avec la structure du cerveau humain, ces neurones ne sont pas organisés de façon anarchique mais sont regroupés par couches sous forme de "colonnes", des connexions entre deux couches adjacentes étant affectées à une fonction particulière, comme montré dans la figure 2. Cette figure représente N couches de neurones superposés comprenant deux couches extrêmes COUCHE 1 et COUCHE N, et (N-2) couches cachées COUCHE 2 à COUCHE (N-1) comprises entre les deux couches extrêmes. La couche extrême 1 est communément dénommée "rétine" ou "couche d'entrée" et reçoit un vecteur d'entrée tandis que la couche extrême COUCHE N, ou couche de sortie, produit un vecteur de sortie correspondant. Dans cette représentation, chaque neurone d'une couche donnée n est connecté à chacun des neurones de la couche supérieure (n+1) immédiatement adjacente, l'entier n étant compris entre 1 et N-1. Comme précisé, en référence à la figure 1, à chacune de ces connexions est attribué un coefficient synaptique W respectif.

En pratique, et à titre d'exemple, le réseau de neurones peut être utilisé pour une reconnaissance de chiffres tels que 0, 1, 2, ..., 8, 9. Dans ce cas, le vecteur d'entrée est un bloc de pixels numériques d'une image numérisée d'un chiffre donné écrit par une personne quelconque. A chaque connexion entre deux neurones est attribué un coefficient synaptique respectif W déduit lors d'une phase d'apprentissage du réseau. Ces coefficients synaptiques correspondent à des valeurs de coefficients de multiplication matricielle appliqués à des pixels de l'image. La couche de sortie COUCHE N produit un vecteur de sortie qui est une information binaire identifiant le chiffre "reconnu". Des sorties de neurones d'une couche respective produisent une image de caractéristiques qui présente des caractéristiques "filtrées" de l'image de caractéristiques produite aux sorties des neurones de la couche adjacente inférieure. Il sera décrit ultérieurement plus en détail chacune des étapes de la mise en application de ce modèle pour le système de traitement de données multiprocesseur selon l'invention.

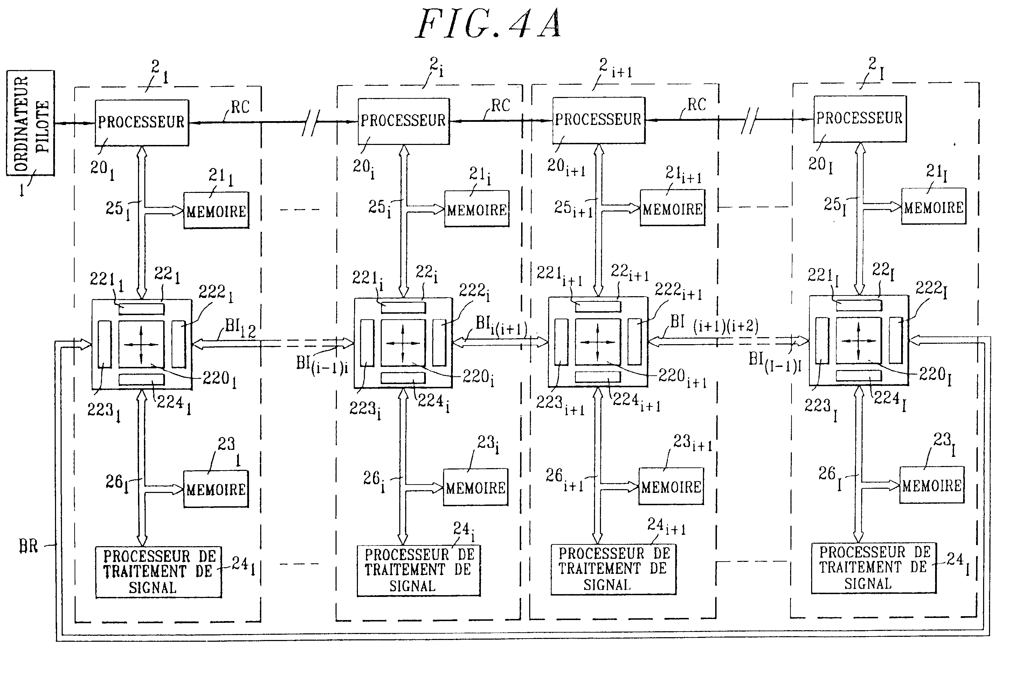

Un système de traitement de données multiprocesseur selon la technique antérieure, tel que celui décrit dans la demande de brevet européen EP-A-433142, est montré à la figure 3. Le système multiprocesseur comprend une pluralité de modules en cascade, dont deux modules adjacents $M_i$ et $M_{i+1}$ sont représentés dans la figure 3. Chacun des modules $M_i$, $M_{i+1}$ inclut un processeur $PR_i$, $PR_{i+1}$, appelé transputer, une mémoire RAM $ME_i$, $ME_{i+1}$ et un réseau programmable de cellules logiques $LCA_i$, $LCA_{i+1}$. Les processeurs respectifs des divers modules sont interconnectés au moyen d'un réseau de communication RC. Ce réseau de communication RC assure notamment le transfert d'informations de contrôle/commande entre processeurs. Pour un module donné $M_i$, le processeur $PR_i$, la mémoire $ME_i$ et le réseau de cellules logiques $LCA_i$ sont interconnectés au moyen d'un bus de module $BM_i$ respectif. Ce bus de module $BM_i$ est composé de trois bus élémentaires spécialisés qui sont un bus de données, un bus d'adresse et un bus de commande, et interconnecte le processeur, la mémoire et un premier moyen d'interface d'entrée/sortie dans le réseau de cellules logiques $LCA_i$. Les réseaux programmables de cellules logiques (LCA) sont connus de l'homme du métier et sont constitués de circuits logiques, combinatoires et séquentiels configurables. Cette configuration est réalisée par le processeur du module.

Selon la demande de brevet précitée, le réseau de cellules logiques programmable est configuré en trois moyens d'interface d'entrée/sortie et un moyen central de traitement et d'aiguillage de données. Les moyens d'interface d'entrée/sortie mettent en oeuvre notamment des fonctions de stockage temporaire de données. Le moyen central assure des fonctions d'aiguillage des données entre les moyens d'interface, et des fonctions de traitement élémentaire (changement de formats des données, codage, fonctions précalculées) par exemple en mode pipeline. Le premier moyen d'interface du réseau de cellules constitue l'interface entre le bus de module $BM_i$ et le moyen central tandis que les second et troisième moyens d'interface interfacent le moyen central respectivement avec deux bus intermodules $BIM_i$ et $BIM_{i-1}$. Lesdits bus $BIM_i$ et $BIM_{i-1}$ sont alors connectés respectivement avec un troisième moyen d'interface dans le réseau logique d'un module supérieur immédiatement adjacent $M_{i+1}$ et un second moyen d'interface dans le réseau logique d'un module inférieur immédiatement

adjacent $M_{i-1}$.

L'introduction d'un réseau programmable de cellules logiques dans chaque module d'une telle architecture multiprocesseur est particulièrement intéressante en ce qu'elle induit un grain fin de parallélisme entre modules en affectant les tâches de bas niveau (accès au bus intermodule, fonctions élémentaires) au réseau logique $LCA_i$.

La figure 4A montre la première variante d'un système de traitement de données selon l'invention pour la réalisation préférée d'un réseau de neurones formels dans le cadre par exemple de la reconnaissance de chiffres compris entre 0 à 9. Le système comprend I modules $2_1$ à $2_I$ dans une architecture en cascade.

Chaque module $2_i$, i étant un entier variant entre 1 à I, comprend une unité de traitement de données sous la forme d'un processeur $20_i$, une première mémoire de type RAM $21_i$, un réseau programmable de cellules logiques $22_i$, une seconde mémoire $23_i$, et un processeur de traitement de signal constituant un coprocesseur ou unité de traitement spécialisé dédié $24_i$. Au sein du module $2_i$, le processeur $20_i$, la mémoire $21_i$ et un moyen d'interface d'entrée/sortie $221_i$ du réseau programmable de cellules logiques $22_i$ sont interconnectés au moyen d'un bus commun de module $25_i$. Typiquement, ce bus commun est constitué des trois bus élémentaires, à savoir bus d'adresse, bus de données et bus de commande.

Comparativement à ce qui a été décrit précédemment en référence à la technique antérieure selon la figure 3, le réseau programmable de cellules logiques $22_i$ est programmé en quatre moyens d'interface d'entrée/sortie $221_i$, $222_i$, $223_i$ et $224_i$ et un moyen central de traitement et d'aiguillage de données $220_i$. Selon cette réalisation, les moyens d'interface d'entrée/sortie $221_i$ à $224_i$ constituent principalement des moyens de stockage temporaire ou moyens tampons. Le moyen central $220_i$ est configuré pour aiguiller des données depuis et vers les moyens d'interface d'entrée/sortie $221_i$ à $224_i$, et effectuer des traitements élémentaires sur les données reçues par les moyens d'interface d'entrée/sortie.

Le premier moyen d'interface d'entrée/sortie $221_i$ est relié au bus de module $25_i$. Ce moyen d'interface d'entrée/sortie $221_i$ est par exemple utilisé pour :

- la mémorisation momentanée de données transmises par le processeur $20_i$ afin de libérer ce dernier pour d'autres tâches; et
- l'accès direct mémoire (DMA) à la mémoire $21_i$ rattaché au processeur $20_i$ par le réseau de cellules logiques $22_i$.

Les second et troisième moyens d'interface d'entrée/sortie $222_i$ et $223_i$ du réseau de cellules logiques $22_i$ du ième module $2_i$ sont respectivement connectés à un troisième moyen d'interface d'entrée/sortie $223_{i+1}$ d'un module adjacent immédiatement supérieur $2_{i+1}$, et un second moyen d'interface d'en-

trée/sortie $222_{i-1}$ d'un module adjacent immédiatement inférieur $2_{i-1}$. Ces connexions sont respectivement réalisées au moyen de deux bus intermodules $BI_{i(i+1)}$ et $BI_{(i-1)i}$. Ainsi les I réseaux de cellules logiques programmables sont mis en cascade au moyen de bus intermodules $BI_{12}$, ..., $BI_{(I-1)I}$. Selon la réalisation préférée, le troisième moyen d'interface d'entrée/sortie $223_1$ du premier module $2_1$ et le second moyen d'interface $222_I$ du $I^{ème}$ module $2_I$ sont reliés par un bus de rétroaction BR.

Les bus intermodules $BI_{12}$ à $BI_{(I-1)I}$ en série avec le bus de rétroaction BR constituent ainsi un anneau. Les second et troisième moyens d'interface $222_i$ et $223_i$ peuvent par exemple être utilisés lors d'une transmission de données entre processeurs $20_i$ de modules non adjacents et conférer ainsi aux réseaux de cellules logiques $22_i$ des fonctions de noeud de communication rapide.

Dans chaque module $2_i$, le processeur de traitement du signal $24_i$, la seconde mémoire $23_i$ et le quatrième moyen d'interface d'entrée/sortie $224_i$ sont interconnectés ensemble au moyen d'un bus commun $26_i$.

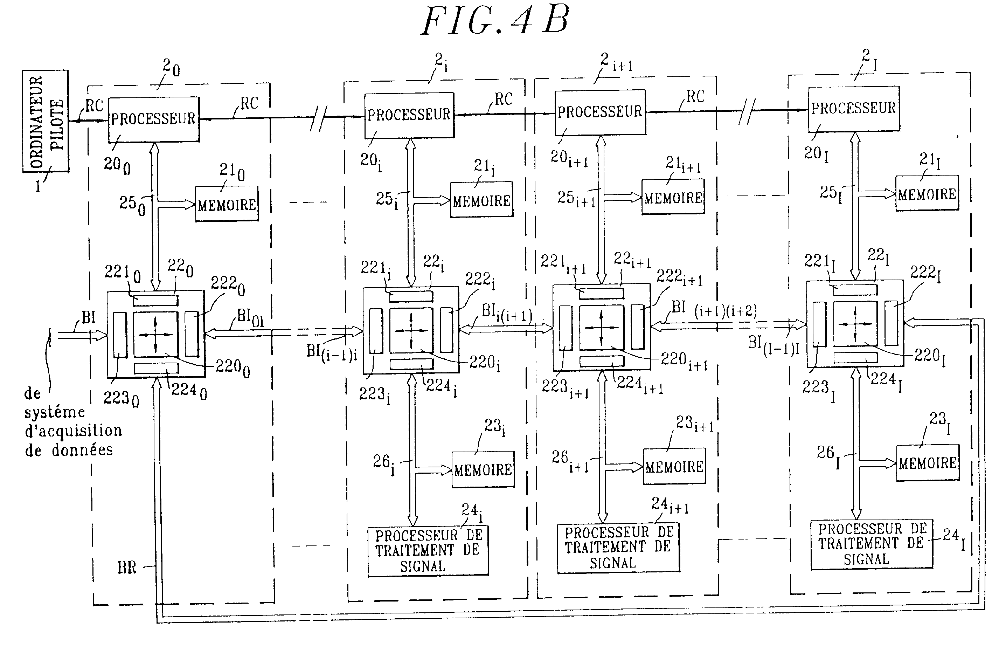

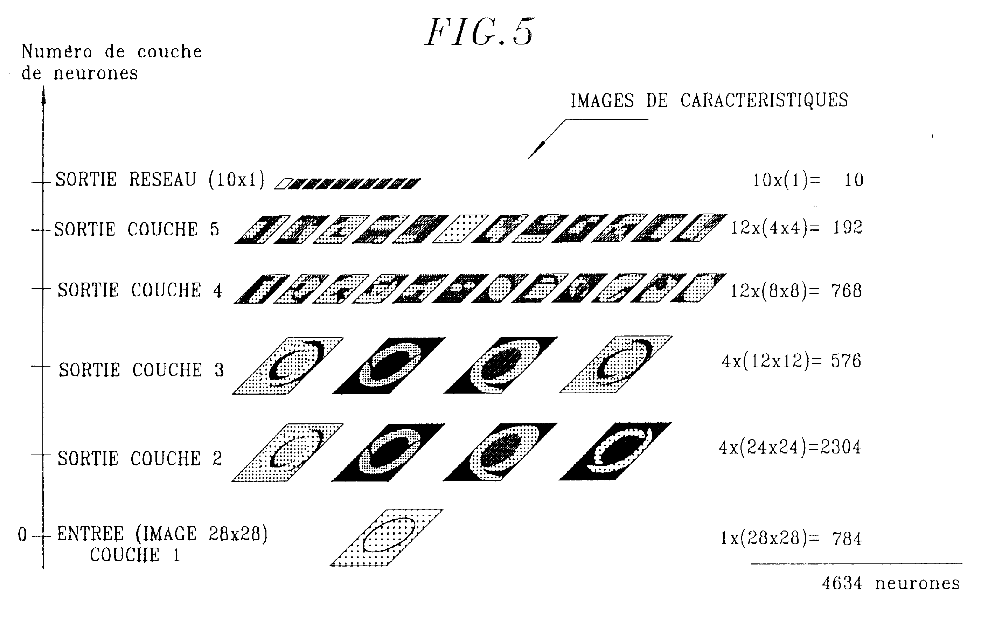

En référence aux figures 5, 6, 7 et 8, il est maintenant décrit le fonctionnement du système de traitement de données selon l'invention, pour la réalisation préférée qui concerne les réseaux de neurones formels.

La figure 5 montre des résultats typiques obtenus dans le cadre des réseaux de neurones formels pour la reconnaissance de chiffres manuscrits compris entre 0 à 9. Une telle application peut par exemple concerner la reconnaissance de codes postaux pour une distribution de courrier "automatisée". Dans le diagramme de la figure 5, l'axe des ordonnées est relatif aux numéros des couches de neurones dans une architecture telle que celle présentée en référence à la figure 2. Dans ce diagramme, il est supposé que le nombre de couches de neurones est égal à 5. Le vecteur d'entrée est un bloc ayant (28 x 28) pixels représentatif d'un chiffre quelconque, ici 0, écrit par une personne et numérisé. Le réseau est composé de 4634 neurones.

Chaque neurone de la couche d'entrée (COUCHE 1), dite rétine, reçoit respectivement un pixel du vecteur d'entrée. La première couche cachée COUCHE 2 est divisée en 4 sous-couches de (24 x 24) neurones. Chaque neurone de chaque sous-couche reçoit (5 x 5) pixels voisins du bloc d'entrée après multiplication par une matrice ligne de coefficients synaptiques respectifs. Il est rappelé que ces coefficients synaptiques sont utilisés pour le traitement en des coefficients de multiplication matricielle. Quatre blocs de (24 x 24) pixels sont ainsi délivrés par les sorties respectives des quatre sous-couches de neurones de la COUCHE 1.

Les coefficients synaptiques appliqués entre les sorties des neurones de la couche COUCHE 1 et les quatre sous-couches de la seconde couche COUCHE 2 sont relatifs à des traitements spécifiques effectués sur l'image de (28 x 28) pixels d'entrée. Des coefficients synaptiques respectifs entre les quatre sous-couches de la COUCHE 2 et quatre sous-couches de la COUCHE 3 sont relatifs à des traitements de moyennage et sous-échantillonage par deux. Des sorties respectives des neurones des quatre sous-couches de la COUCHE 3 produisent ainsi quatre blocs d'images de (12 x 12) pixels.

Les sorties des COUCHE 3 et COUCHE 4 ne seront pas détaillées. Il doit néanmoins être remarqué que le rôle de chaque couche consiste en l'extraction de caractéristiques fondamentales du bloc de pixels (28 x 28) numérisé d'un chiffre manuscrit. Comme montré sur la figure 5, une couche de sortie de 10 neurones produit dix pixels en noir et blanc, le rang de l'unique pixel blanc produit par l'un des dix neurones étant représentatif du chiffre d'entrée "reconnu" après les diverses étapes de "filtrage numérique" réalisées respectivement par les couches de neurones.

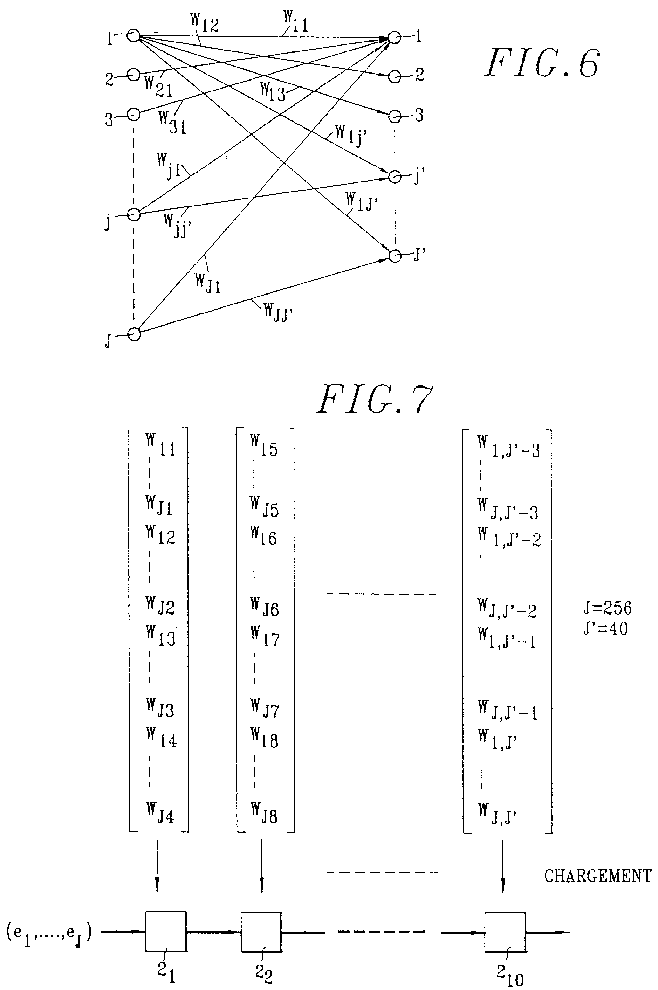

En référence aux figures 6, 7 et 8, il est maintenant détaillé l'implantation d'un réseau de neurones formels dans le système de traitement de données multiprocesseur selon l'invention, tel que présenté à la figure 4A. Selon cette réalisation préférée, le réseau de neurones comprend trois couches respectivement de 256, 40 et 10 neurones. Les neurones de la première couche, dite couche d'entrée, et de la seconde couche établissent chacun des connexions (affectées chacun à un coefficient synaptique respectif) respectivement avec chacun des neurones de la couche adjacente immédiatement supérieure, c'est-à-dire la seconde couche et la troisième couche, dite couche de sortie. Le vecteur d'entrée est un bloc de (16 x 16) = 256 pixels d'une image numérisée d'un chiffre manuscrit compris entre 0 et 9.

Comme montré à la figure 6, toutes les connexions affectées à des coefficients synaptiques respectifs entre deux couches adjacentes respectivement de J et J' neurones sont entièrement définies par une unique matrice rectangulaire de dimension (J x J'). Chaque coefficient $W_{jj'}$ de la matrice rectangulaire, j étant compris entre 1 et J, et j' entre 1 et J', correspond à la valeur d'un coefficient synaptique de la connexion entre un neurone de rang j et un neurone de rang j' des deux couches adjacentes respectivement.

Conformément à la réalisation préférée, deux matrices respectives de (J x J') = (256 x 40) et (J x J') = (40 x 10) coefficients synaptiques entre les première et seconde couches et entre les seconde et troisième couches sont alors utilisées, soit un total de 10640 coefficients ou connexions.

A titre indicatif, ces coefficients synaptiques pour des réalisations particulières (reconnaissance de chiffres, ...) sont obtenus lors d'une phase d'apprentissage par un algorithme de rétropropagation d'un gradient. Sommairement, cet algorithme effectue des calculs de reconnaissance pour des coefficients synaptiques donnés initiaux. Les résultats de ces calculs sont comparés avec les résultats attendus de reconnaissance. Les coefficients sont modifiés compte tenu de cette comparaison. Après plusieurs itérations, les coefficients synaptiques convergent vers des valeurs optimales de reconnaissance. Cette phase d'apprentissage est généralement très coûteuse en temps.

Selon la première réalisation préférée, le système de traitement de données selon l'invention (figure 4A) comprend 1 = 10 modules $2_1$ à $2_{10}$. Dans une première étape, comme montré schématiquement à la figure 7, chaque module $2_i$, i étant compris entre 1 et 10, est affecté au traitement relatif à toutes les connexions entre la couche d'entrée et respectivement l'un de dix quadruplés de neurones de la seconde couche (4 x 10 = 40). Les calculs matriciels :

$$V_p = \sum_k W_{kp}\ e_k\quad ,$$

où k varie entre 1 et J = (16 x 16) et p varie entre 1 et J' = 40,

sont effectués par le même processeur de traitement de signal pour quatre valeurs de l'indice p fixées, et donc relativement aux quatre neurones d'un quadruplé respectif.

Un avantage de l'invention apparait en ce que ces multiplications matricielles sont réalisées par les processeurs de traitement de signal $24_1$ à $24_{l=10}$.

Suite à ce premier traitement (connexions entre les première et seconde couches), chaque processeur de traitement de signal $24_1$ à $24_{10}$ est affecté au traitement des multiplications matricielles relatives aux connexions entre les neurones de la seconde couche et un neurone respectif de la troisième couche, dite couche de sortie (1 x 10 = 10).

L'utilisation d'un processeur du traitement de signal ou coprocesseur spécialisé $24_i$ libère le processeur $20_i$ qui peut effectuer d'autres tâches.

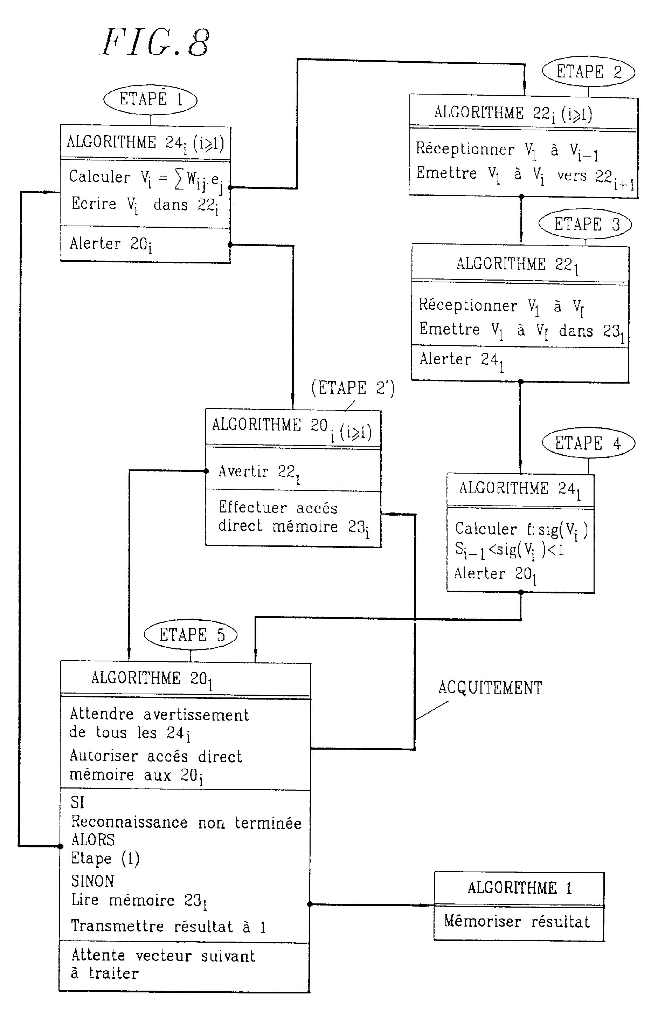

En référence aux figures 8 et 4A, il est maintenant décrit l'implantation et le fonctionnement en un réseau de neurones formels du système de traitement de données multiprocesseur selon l'invention.

Préalablement au fonctionnement du système en un réseau de neurones formels en mode reconnaissance, le système est initialisé à l'initiative d'un ordinateur pilote 1 relié au premier processeur $20_1$. Cette initialisation est établie par l'ordinateur 1 à travers le réseau de communication interprocesseur RC. L'initialisation comprend :

relativement à chaque processeur $20_1$ à $20_{10}$:
- le chargement d'un programme de fonctionnement dans la mémoire respective $21_1$ à $21_{10}$ a

travers le bus $25_1$ à $25_{10}$,
- la configuration du réseau associé de cellules logiques $22_1$ à $22_{10}$;
- le chargement des programmes (multiplication matricielle ...) relatifs au fonctionnement du processeur de traitement de signal $24_1$ à $24_{10}$ dans la mémoire associée $23_1$ à $23_{10}$ via le réseau $22_1$ à $22_{10}$, et
- le chargement d'un ensemble respectif de coefficients synaptiques tels que décrit précédemment et relatifs au processeur de traitement de signal $24_1$ à $24_{10}$, dans la mémoire associée $23_1$ à $23_{10}$;

ainsi que le chargement du premier vecteur de forme constituant des données d'entrée $e_1$ à $e_J$ à reconnaître par traitement (bloc de 16 X 16 pixels), dans la mémoire $21_1$ du processeur $20_1$ du premier module $2_1$.

Dans le cas d'un traitement séquentiel de plusieurs vecteurs de données d'entrée à reconnaître, ces derniers sont mémorisés au fur et à mesure de leur disponibilité dans la mémoire $21_1$ rattachée au processeur du premier module $2_1$. Chacun des vecteurs d'entrée est par exemple fourni par l'ordinateur pilote 1 après un traitement préalable (traitement linéaire de normalisation à la taille 16 x 16 des blocs initiaux fournis par un camescope) sur des blocs initiaux via le réseau de communication RC.

Le diagramme d'algorithmes relatif à un premier traitement de connexions entre des première et seconde couches de neurones de la figure 8 permet d'appréhender le fonctionnement du système de traitement de données multiprocesseur selon l'invention en un réseau de neurones formels. Chacun des "tableaux" de la figure 8 est relatif à un algorithme effectué par l'un ou plusieurs des processeurs $20_i$, processeurs de traitement de signal $24_i$, ou réseaux de cellules logiques $22_i$ du système.

Il a été vu précédemment que le vecteur de données d'entrée est initialement chargé dans la mémoire $21_1$. Le processeur $20_1$ lit ce vecteur dans la mémoire $21_1$ et l'écrit dans le premier moyen d'interface d'entrée/sortie $221_1$ du réseau programmable de cellules logiques $22_1$ du premier module $2_1$. Le moyen central $220_1$ du réseau $22_1$ aiguille alors ce vecteur vers le second moyen d'interface $222_1$ et ce second moyen d'interface $222_1$ le retransmet au troisième moyen d'interface $223_2$ du réseau logique $22_2$ du second module $2_2$ et ainsi de suite. Le vecteur est ainsi diffusé dans l'anneau $BI_{12}$ à $BI_{(l-1)l}$ successivement vers les modules adjacents immédiatement supérieurs. Chacun des moyens centraux des réseaux aiguille et prélève via le quatrième moyen d'interface $224_i$ l'ensemble des (16 x 16) pixels du vecteur vers la mémoire $23_i$ associée à son processeur de traitement de signal $24_i$. Le vecteur de données d'entrée utilisé par chaque module $2_i$ dans la configuration décrite précédemment est ainsi mémorisé dans la mé-

moire respective $23_i$ associée au processeur de traitement du signal $24_i$.

La première étape (étape 1) de l'algorithme relatif à chacun des processeurs de traitement de signal $24_i$, avec i compris entre 1 et I, consiste à calculer le potentiel $V_i$ relatif aux neurones attribués au module $2_i$, puis à écrire le potentiel ainsi calculé dans le moyen d'interface d'entrée/sortie $224_i$ du réseau logique $22_i$ du même module $2_i$. Chacun $220_i$ des moyens centraux des réseaux logiques configurés à cet effet transmet progressivement les résultats des calculs de potentiel $V_1$ à $V_i$ vers le réseau suivant $22_{i+1}$ jusqu'à ce que tous les résultats $V_1$ à $V_i$ soient reçus par le troisième moyen d'interface d'entrée/sortie $223_1$ du réseau logique du premier module $2_1$ via le bus de rétroaction BR (étape 2).

Puis le moyen d'interface d'entrée/sortie $223_1$ du premier module $2_1$ écrit les résultats de calcul de potentiel reçus dans la mémoire $23_1$ et alerte le processeur de traitement de signal $24_1$ (étape 3). Le processeur $24_1$ calcule la valeur de la fonction sigmoïde (fonction f non linéaire à base de fonctions tangente hyperbolique définie à partir du modèle présenté initialement dans la description) pour chaque "pixel" ou potentiel $V_i$ de neurone produit par les processeurs $24_i$ (étape 5) pour obtenir les niveaux de sortie de tous les neurones de la seconde couche pour ce premier traitement. Parallèlement à cela et puisque chaque processeur de traitement de signal $24_i$ écrit les potentiels calculés propres aux quatre neurones de la seconde couche qu'il simule dans ce premier traitement, dans la mémoire associée $23_i$, les processeurs $20_1$ à $20_I$ lisent ensuite les potentiels des neurones mémorisés respectivement dans les mémoires $23_1$ à $23_I$ lorsque tous les potentiels ont été calculés (étape 2').

Selon la réalisation, deux traitements relatifs aux première et seconde couches et aux seconde et troisième couches sont prévus. Ainsi les sorties des neurones de la seconde couche de la configuration choisie mémorisées dans la mémoire $23_1$ sont retraitées par les processeurs de traitement du signal $24_1$ à $24_I$, pour de nouveaux calculs de potentiels après diffusion sur l'anneau des sorties des neurones telles que calculées lors du premier traitement.

Selon la seconde variante montrée à la figure 4B, il est proposé d'ajouter un module supplémentaire $2_O$ aux modules initiaux $2_1$ à $2_I$, en amont de ces derniers. Ce module comprend un processeur $20_O$, une mémoire $21_O$ et un réseau programmable de cellules logiques $22_O$. Ce module est prévu afin d'injecter directement les images de pixels à traiter dans un moyen d'interface d'entrée/sortie $223_O$ du réseau programmable $22_O$. Cette injection permet d'augmenter le flux des images à traiter puisqu'alors ces dernières ne transitent pas par l'ordinateur pilote 1 et de plus, ne nécessitent pas l'utilisation du réseau de communication RC. Un système d'acquisition de données (images), tel que camescope ou scanner (non représenté), est alors directement connecté au troisième moyen d'interface d'entrée/sortie $223_O$ du réseau programmable $22_O$ du module supplémentaire $2_O$ à travers un bus BI. La mémoire $21_O$, le processeur $20_O$ et un premier moyen d'interface d'entrée/sortie $221_O$ du réseau programmable $22_O$ dans le module supplémentaire $2_O$ sont interconnectés de manière identique aux interconnexions dans les autres modules $22_1$ à $22_I$, au moyen d'un bus $25_O$. Les images à traiter injectées à travers un bus dans le troisième moyen d'interface d'entrée/sortie $223_O$ du réseau programmable $22_O$ peuvent subir un premier traitement préalable (formatage 16 x 16), dans le moyen de traitement et d'aiguillage $220_O$ du réseau $22_O$ par programmation de ce dernier. Le second moyen d'interface $222_O$ est connecté au troisième moyen d'interface $223_1$ du premier $2_1$ des modules en cascade $2_1$ à $2_I$ à travers un bus intermodule supplémentaire $BI_{01}$.

Pour des raisons identiques à celles de la première variante, un bus de rétroaction BR peut également être fourni. Ce dernier interconnecte le second moyen d'interface d'entrée/sortie $222_I$ du réseau programmable $22_I$ du dernier module $2_I$ au quatrième moyen d'interface d'entrée/sortie $224_O$ du réseau $22_O$ du module supplémentaire.

A titre indicatif, une reconnaissance d'un chiffre manuscrit numérisé en (16 x 16) pixels par le système de traitement de données selon l'invention simulant 10640 neurones nécessite 175 µs. Des durées de l'ordre de la dizaine de milliseconde sont habituellement nécessaires pour des systèmes conventionnels.

## Revendications

1. Système de traitement de données multiprocesseur incluant une pluralité de modules ($2_1$ à $2_I$) interconnectés en cascade par des bus intermodules ($BI_{12}$ à $BI_{(I-1)I}$),

chaque module ($2_i$) comprenant une unité de traitement de données ($20_i$), une première mémoire ($21_i$), un moyen logique ($22_i$) qui est configurable en des premier, second et troisième moyens d'interface d'entrée/sortie ($221_i$, $222_i$, $223_i$) pour mémoriser temporairement des données et en un moyen central ($220_i$) pour traiter lesdites données mémorisées et aiguiller lesdites données mémorisées traitées vers l'un desdits moyens d'interface d'entrée/sortie, et un premier bus de module ($25_i$) interconnectant ladite unité de traitement ($20_i$), ladite première mémoire ($21_i$) et ledit premier moyen d'interface ($221_i$),

deux bus intermodules ($BI_{(I-1)i}$, $BI_{i(I+1)}$) interconnectant lesdits second et troisième moyens d'interface respectivement à un troisième moyen d'interface et un second moyen d'interface dans deux modules adjacents audit module,

lesdites unités de traitement de données $(20_1 - 20_l)$ étant interconnectées en cascade à travers un réseau de communication (RC),

caractérisé en ce que chacun desdits modules $(2_i)$ comprend en outre une unité de traitement spécialisé $(24_i)$ et une seconde mémoire $(23_i)$, et un quatrième moyen d'interface d'entrée/sortie $(224_i)$ est configuré dans ledit moyen logique configurable $(22_i)$,

l'unité de traitement spécialisé $(24_i)$, la seconde mémoire $(23_i)$ et le quatrième moyen d'interface d'entrée/sortie $(224_i)$ étant interconnectés par un second bus de module $(26_i)$.

2. Système de traitement de données conforme à la revendication 1, caractérisé en ce que les second et troisième moyens d'interface d'entrée/sortie $(222_l, 223_1)$ respectivement dans les moyens logiques des dernier et premier modules $(2_l, 2_1)$ en cascade sont reliés au moyen d'un bus de rétroaction (BR).

3. Système de traitement de données conforme à la revendication 1, caractérisé en ce que ledit système comprend en outre un moyen d'acquisition de données et un module supplémentaire $(2_O)$ disposé en amont desdits modules en cascade $(2_1$ à $2_l)$ et interconnecté au premier $(2_1)$ desdits modules au moyen d'un bus intermodule supplémentaire $(BI_{01})$,

ledit module supplémentaire incluant une unité de traitement de données $(20_O)$, une première mémoire $(21_O)$ et un moyen logique $(22_O)$ configurable en premier, second, troisième et quatrième moyens d'interface d'entrée/sortie $(221_O, 222_O, 223_O, 224_O)$ interconnectés d'une manière identique à ceux dans chacun des modules en cascade,

ledit moyen d'acquisition étant interconnecté au troisième moyen d'interface d'entrée/sortie dudit moyen logique $(22_O)$ dudit module supplémentaire $(2_O)$ au moyen d'un bus (BI),

ledit bus intermodule supplémentaire $(B_{O1})$ interconnectant les second et troisième moyens d'interface d'entrée/sortie $(222_O, 221_1)$ respectivement dans les moyens logiques des module supplémentaire et premier module $(2_1)$.

4. Système de traitement de données conforme à la revendication 3, caractérisé en ce que les second et quatrième moyens d'interface d'entrée/sortie $(222_l, 224_O)$ respectivement dans les moyens logiques des dernier module $(2_l)$ et module supplémentaire $(2_O)$ sont reliés au moyen d'un bus de rétroaction (BR).

5. Procédé de traitement de données d'entrée $(e_1$ à $e_J)$ mettant en oeuvre le système de traitement de données conforme aux revendications 2 ou 4, comprenant:

- une étape d'initialisation consistant, en outre, à charger des ensembles de coefficients respectivement dans les secondes mémoires $(23_i)$ des modules $(2_i)$ en cascade à travers ledit réseau de communication (RC), et lesdites données d'entrée dans la première mémoire $(21_1)$ du premier module $(2_1)$, et
- au moins un ensemble de première et seconde étapes,
- la première étape consistant à effectuer des traitements partiels sur lesdites données d'entrée $(e_1, .., e_J)$ dans lesdites unités de traitement spécialisé $(24_i)$ en fonction desdits ensembles de coefficients afin d'établir des données partielles, respectivement,
- la seconde étape consistant à rapatrier des données partielles vers l'un quelconque $(22_1)$ des moyens logiques ou l'une quelconque $(21_1, 23_1)$ des premières et secondes mémoires à travers lesdits bus intermodules $(BI_{(I-1)i})$ et ledit bus de rétroaction (BR).

**Patentansprüche**

1. Multiprozessor-Datenverarbeitungssystem, enthaltend eine Vielzahl von miteinander durch intermodulare Busse $(BI_{12}$ bis $BI_{(I-1)I})$ in Kaskade verbundenen Modulen $(2_1$ bis $2_I)$,

wobei jedes Modul $(2_i)$ aufweist eine Datenverarbeitungseinheit $(20_i)$, einen ersten Speicher $(21_i)$, ein Logikmittel $(22_i)$, das in erste, zweite und dritte Ein-/Ausgangsschnittstellenmittel $(221_i, 222_i, 223_i)$ zum vorübergehenden Speichern von Daten und ein zentrales Mittel $(220_i)$ konfigurierbar ist, um die genannten gespeicherten Daten zu verarbeiten und die genannten gespeicherten verarbeiteten Daten zu einem der genannten Ein-/Ausgangsschnittstellenmittel abzuzweigen, und einen ersten Modulbus $(25_i)$, der die genannte Verarbeitungseinheit $(20_i)$, den genannten ersten Speicher $(21_i)$ und das genannte erste Schnittstellenmittel $(221_i)$ verbindet,

wobei zwei intermodulare Busse $(BI_{(I-1)i}, BI_{I(i+1)})$, welche die genannten zweiten und dritten Schnittstellenmittel jeweils mit einem dritten Schnittstellenmittel und einem zweiten Schnittstellenmittel in zwei neben dem genannten Modul befindliche Module verbinden,

wobei die genannten Verarbeitungseinheiten $(20_i - 20_1)$ über ein Kommunikationsnetz (RC) in Kaskade miteinander verbunden sind,

dadurch gekennzeichnet, daß jedes der genann-

ten Module ($2_i$) ferner eine spezialisierte Verarbeitungseinheit ($24_i$) und einen zweiten Speicher ($23_i$) enthält, und daß ein viertes Ein-/Ausgangsschnittstellenmittel ($224_i$) in dem genannten konfigurierbaren Logikmittel ($22_i$) konfiguriert ist, wobei die spezialisierte Verarbeitungseinheit ($24_i$), der zweite Speicher ($23_i$) und das vierte Ein-/Ausgangsschnittstellenmittel ($224_i$) durch einen zweiten Modulbus ($26_i$) miteinander verbunden sind.

2. Datenverarbeitungssystem nach Anspruch 1, dadurch gekennzeichnet, daß die zweiten und dritten Ein-/Ausgangsschnittstellenmittel ($222_i$, $223_1$) jeweils in den Logikmitteln der letzten und ersten in Kaskade verbundenen Module ($2_i$, $2_1$) mit Hilfe eines rückwirkenden Bus (BR) verbunden sind.

3. Datenverarbeitungssystem nach Anspruch 1, dadurch gekennzeichnet, daß das genannte System ferner ein Mittel zur Datenerfassung und ein zusätzliches Modul ($2_0$) enthält, das vor den ersten Modulen ($2_1$ bis $2_i$) in Kaskade angeordnet und mit Hilfe eines zusätzlichen intermodularen Bus ($BI_{01}$) mit dem ersten ($2_1$) der genannten Module verbunden ist, wobei das genannte zusätzliche Modul eine Datenverarbeitungseinheit ($20_0$), einen ersten Speicher ($21_0$) und ein Logikmittel ($22_0$) enthält, welches in erste, zweite, dritte und vierte Ein-/Ausgangsschnittstellenmittel ($221_0$, $222_0$, $223_0$, $224_0$) konfigurierbar ist, die auf gleiche Weise miteinander verbunden sind wie die in jedem der Module in Kaskade, wobei das genannte Mittel zur Erfassung mit Hilfe eines Bus (BI) mit dem dritten Ein-/Ausgangsschnittstellenmittel des genannten Logikmittels ($22_0$) des genannten zusätzlichen Moduls ($2_0$) verbunden ist, wobei der zusätzliche intermodulare Bus ($B_{01}$) das zweite und dritte Ein-/Ausgangsschnittstellenmittel ($222_0$, $222_1$) jeweils in den Logikmitteln des zusätzlichen Moduls und des ersten Moduls ($2_1$) miteinander verbindet.

4. Datenverarbeitungssystem nach Anspruch 1, dadurch gekennzeichnet, daß das zweite und vierte Ein-/Ausgangsschnittstellenmittel ($222_i$, $224_0$) jeweils in den Logikmitteln des letzten Moduls ($2_i$) und des zusätzlichen Moduls ($2_0$) mit Hilfe eines rückwirkenden Bus (BR) verbunden sind.

5. Verfahren zur Verarbeitung von Eingangsdaten ($e_1$ bis $e_J$), in dem das erfindungsgemäße Datenverarbeitungssystem nach den Ansprüchen 2 oder 4 angewandt wird, umfassend:
 - einen Initialisierungsschritt, der ferner darin besteht, jeweils Koeffizientengesamtheiten über das genannte Kommunikationsnetz (RC) in die zweiten Speicher ($23_i$) der Module ($2_i$) in Kaskade und die genannten Eingangsdaten in den ersten Speicher ($21_1$) des ersten Moduls ($2_1$) zu laden, und
 - mindestens einer Gesamtheit des ersten und zweiten Schrittes;
 - wobei der erste Schritt darin besteht, partielle Verarbeitungen an den genannten Eingangsdaten ($e_1$, ..., $e_J$) in den genannten spezialisierten Verarbeitungseinheiten ($24_i$) in Abhängigkeit von den genannten Koeffizientengesamtheiten auszuführen, um jeweils partielle Daten zu erzeugen,
 - wobei der zweite Schritt darin besteht, die partiellen Daten über die genannten intermodularen Busse ($BI_{(I-1)i}$) und den genannten rückwirkenden Bus (BR) zu einem beliebigen Logikmittel ($22_i$) oder einem beliebigen ($21_i$, $23_i$) ersten und zweiten Speicher zurückzuführen.

## Claims

1. Multiprocessor data processing system including a plurality of cascaded modules ($2_1$ to $2_i$) interconnected by intermodular buses ($BI_{12}$ to $BI_{(I-1)}I$),
 each module ($2_i$) comprising a data processing unit ($20_i$), a first memory ($21_i$), a logic means ($22_i$) which is configurable into first, second and third input/output interfacing means ($221_i$, $222_i$, $223_i$) for temporarily memorizing data and into a central means ($220_i$) for processing said memorized data and switching said processed memorized data towards one of said input/output interfacing means, and a first module bus ($25_i$) interconnecting said processing unit ($20_i$), said first memory ($22_i$) and said first interfacing means ($221_i$),
 two intermodular buses ($BI_{(I-1)i}$, $BI_{i(i+1)}$) interconnecting said second and third interfacing means respectively to a third interfacing means and a second interfacing means in two modules adjacent to said module,
 said data processing units ($20_1$ - $20_i$) being cascaded interconnected via a communication network (RC),
 characterized in that each of said modules ($2_i$) further comprises a specialized processing unit ($24_i$) and a second memory ($23_i$), and a fourth input/output interfacing means ($224_i$) is configurated in said configurable logic means ($22_i$),
 the specialized processing unit ($24_i$), the second memory ($23_i$) and the fourth input/output interfacing means ($224_i$) being interconnected by a second module bus ($26_i$).

2. Data processing system according to claim 1, characterized in that the second and third input/output interfacing means ($222_I$, $223_1$) respectively in the logic means of last and first cascaded modules ($2_I$, $2_1$) are connected by means of a feedback bus (BR).

3. Data processing system according to claim 1, characterized in that said system further comprises a data acquiring means and an additional module ($2_0$) set upstream of said cascaded modules ($2_1$ to $2_I$) and interconnected to the first ($2_1$) of said modules by means of an additional intermodular bus ($BI_{01}$),

said additional module including a data processing unit ($20_0$), a first memory ($21_0$) and a logic means ($22_0$) configurable into first, second, third and fourth input/output interfacing means ($221_0$, $222_0$, $223_0$, $224_0$) similarly interconnected to those in each of the cascaded modules,

said acquiring means being interconnected with the third input/output interfacing means of said logic means ($22_0$) of said additional module ($2_0$) by means of a bus (BI),

said additional intermodular bus ($B_{01}$) interconnecting the second and third input/output interfacing means ($222_0$, $222_1$) respectively in the logic means of the additional module and first module ($2_1$).

4. Data processing system according to claim 3, characterized in that the second and fourth input/output interfacing means ($222_I$, $224_0$) respectively in the logic means of the last module ($2_I$) and additional module ($2_0$) are connected by means of a feedback bus (BR).

5. Input data processing method ($e_1$ to $e_J$) implementing the data processing system, according to claims 2 or 4, comprising :
   - an initiation step further consisting in loading respective sets of weights into the second memories ($23_i$) of the cascaded modules ($2_i$) via said communication network (RC), and said input data into the first memory ($21_1$) of the first module ($2_1$), and
   - at least one set of first and second steps,
   - the first step consisting in carrying out partial processings on said input data ($e_1$, .., $e_J$) in said specialized processing units ($24_i$) as a function of said sets of weights for deriving partial data, respectively,
   - the second step consisting in downloading partial data to any one ($22_1$) of logic means or any one ($22_1$, $23_1$) of the first and second memories via said intermodular buses ($BI_{(i-1)i}$) and said feedback bus (BR).

## *FIG.1*
### (TECHNIQUE ANTERIEURE)

## *FIG.3*
### (TECHNIQUE ANTERIEURE)

# FIG.2

(TECHNIQUES ANTERIEURES)

COUCHES CACHEES
2 à (N−1)

# FIG.4A

ORDINATEUR PILOTE

$2_1$    $2_i$    $2_{i+1}$    $2_I$

PROCESSEUR   RC   PROCESSEUR   RC   PROCESSEUR   RC   PROCESSEUR

$20_1$   $20_i$   $20_{i+1}$   $20_I$

$21_1$   $21_i$   $21_{i+1}$   $21_I$

$25_1$   MEMOIRE   $25_i$   MEMOIRE   $25_{i+1}$   MEMOIRE   $25_I$   MEMOIRE

$221_1$   $22_1$   $222_1$   $221_i$   $22_i$   $222_i$   $221_{i+1}$   $22_{i+1}$   $222_{i+1}$   $221_I$   $22_I$   $222_I$

$BI_{12}$   $BI_{i(i+1)}$   $BI_{(i+1)(i+2)}$

$BI_{(i-1)i}$   $BI_{(I-1)I}$

$220_1$   $220_i$   $220_{i+1}$   $220_I$

$223_1$   $224_1$   $223_i$   $224_i$   $223_{i+1}$   $224_{i+1}$   $223_I$   $224_I$

$23_1$   $23_i$   $23_{i+1}$   $23_I$

$26_1$   MEMOIRE   $26_i$   MEMOIRE   $26_{i+1}$   MEMOIRE   $26_I$   MEMOIRE

BR

PROCESSEUR DE TRAITEMENT DE SIGNAL $24_1$   PROCESSEUR DE TRAITEMENT DE SIGNAL $24_i$   PROCESSEUR DE TRAITEMENT DE SIGNAL $24_{i+1}$   PROCESSEUR DE TRAITEMENT DE SIGNAL $24_I$

EP 0 552 074 B1

# FIG. 4B

EP 0 552 074 B1

# FIG.5

Numéro de couche
de neurones

IMAGES DE CARACTERISTIQUES

SORTIE RESEAU (10x1)  $10x(1)=$  10

SORTIE COUCHE 5  $12x(4x4)=$  192

SORTIE COUCHE 4  $12x(8x8)=$  768

SORTIE COUCHE 3  $4x(12x12)=$  576

SORTIE COUCHE 2  $4x(24x24)=2304$

0  ENTREE (IMAGE 28x28)
COUCHE 1  $1x(28x28)=$  784

4634 neurones

EP 0 552 074 B1

*FIG.6*

*FIG.7*

16

## FIG.8

ETAPE 1

**ALGORITHME $24_i$ $(i \geqslant 1)$**

Calculer $V_i = \sum W_{ij} \cdot e_j$

Ecrire $V_i$ dans $22_i$

Alerter $20_i$

ETAPE 2

**ALGORITHME $22_i$ $(i \geqslant 1)$**

Réceptionner $V_1$ à $V_{i-1}$

Emettre $V_1$ à $V_i$ vers $22_{i+1}$

ETAPE 3

**ALGORITHME $22_I$**

Réceptionner $V_1$ à $V_I$

Emettre $V_1$ à $V_I$ dans $23_I$

Alerter $24_I$

(ETAPE 2')

**ALGORITHME $20_i$ $(i \geqslant 1)$**

Avertir $22_1$

Effectuer accés
direct mémoire $23_i$

ETAPE 4

**ALGORITHME $24_I$**

Calculer f: $\text{sig}(V_i)$

$S_{i-1} < \text{sig}(V_i) < 1$

Alerter $20_I$

ACQUITEMENT

ETAPE 5

**ALGORITHME $20_I$**

Attendre avertissement
de tous les $24_i$

Autoriser accés direct
mémoire aux $20_i$

SI
Reconnaissance non terminée
ALORS
Etape (1)
SINON
Lire mémoire $23_I$

Transmettre résultat à 1

Attente vecteur suivant
à traiter

**ALGORITHME 1**

Mémoriser résultat